# EUROPÄISCHE PATENTSCHRIFT

(11) **EP 0 925 313 B1**
(45) Veröffentlichungstag und Bekanntmachung des Hinweises auf die Patenterteilung: **17.05.2000**
(21) Anmeldenummer: 97940103.1
(22) Anmeldetag: 21.08.1997
(51) Int. Cl.: C08F 8/00

(54) **UNLÖSLICHE, NUR WENIG QUELLBARE POLYMERISATE MIT MODIFIZIERTEN AMINOGRUPPEN, VERFAHREN ZU IHRER HERSTELLUNG UND IHRE VERWENDUNG**
INSOLUBLE POLYMERS WHICH CAN SWELL ONLY SLIGHTLY WITH MODIFIED AMINO GROUPS, PROCESSES FOR THEIR PREPARATION, AND THEIR USE
POLYMERISATS NON SOLUBLES A FAIBLE POUVOIR GONFLANT COMPORTANT DES GROUPES AMINO MODIFIES, PROCEDES PERMETTANT DE LES PREPARER ET UTILISATION

(30) Priorität: 11.09.1996 DE 19636883
(43) Veröffentlichungstag der Anmeldung: 30.06.1999
(73) Patentinhaber: BASF AKTIENGESELLSCHAFT, 67056 Ludwigshafen (DE)
(72) Erfinder: UTECHT, Jens, D-68809 Neulu heim (DE); RÜBENACKER, Martin, D-67122 Altrip (DE); NILZ, Claudia, D-67127 Rödersheim-Gronau (DE); RAHM, Rainer, D-67071 Ludwigshafen (DE)
(86) Internationale Anmeldenummer: EP9704545
(87) Internationale Veröffentlichungsnummer: WO9811145

(56) Entgegenhaltungen:
- EP-A- 0 143 328
- EP-A- 0 251 182
- EP-A- 0 545 383
- EP-A- 0 580 078
- DE-A- 4 413 720
- CHEMICAL ABSTRACTS, vol. 109, no. 16, Oktober 1988 Columbus, Ohio, US; abstract no. 129904w, Seite 15; XP000059076 & JP 63 066 205 A (MITSUBISHI CHEMICAL INDUSTRIES CO., LTD.) 24.März 1988
- PATENT ABSTRACTS OF JAPAN vol. 095, no. 006, 31.Juli 1995 & JP 07 082320 A (SHOWA DENKO KK), 28.März 1995,
- PATENT ABSTRACTS OF JAPAN vol. 013, no. 515 (C-655), 17.November 1989 & JP 01 207311 A (AGENCY OF IND. SCIENCE & TECHNOL.), 21.August 1989,

## Beschreibung

Die Erfindung betrifft unlösliche, nur wenig quellbare Polymerisate mit modifizierten Aminogruppen, Verfahren zur Herstellung solcher Polymerisate sowie die Verwendung der unlöslichen, nur wenig quellbaren Polymerisate mit modifizierten Aminogruppen als Adsorberharz für Metallionen sowie als Ionenaustauscher.

Aus der DE-A-23 03 081 ist die Herstellung von wasserlöslichen Umsetzungsprodukten aus Polyethylenimin mit dem Natriumsalz der Chloressigsäure in wäßriger Lösung bekannt. Man erhält dabei wasserlösliche, Iminodiessigsäuregruppen aufweisende Polyethylenimine. Die wasserlöslichen Polymeren werden als Komplexbildner von Metallionen verwendet.

Aus der US-A-3 424 790 ist die Herstellung von wasserlöslichen, carboxymethylierten Polyethyleniminen nach einem mehrstufigen Verfahren bekannt. Zunächst werden dabei äquivalente Mengen Polyethylenimin mit Formaldehyd bei Temperaturen von -15 bis 40°C umgesetzt. Anschließend setzt man das Additionsprodukt mit Cyanwasserstoff oder Alkalimetallcyaniden ebenfalls bei Temperaturen von -15 bis 40°C um und hydrolysiert die Reaktionsprodukte in einer folgenden Reaktionsstufe mit Alkalimetallhydroxiden bei Temperaturen von 50 bis 110°C. Aus der EP-B-071 050 sind partiell hydrolysierte Polymerisate von N-Vinylformamid bekannt, die 90 bis 10 mol-% Vinylamin- und 10 bis 90 mol-% N-Vinylformamideinheiten enthalten. In der EP-A-0 216 387 werden Copolymerisate aus N-Vinylformamid mit anderen ethylenisch ungesättigten Monomeren beschrieben. Durch Hydrolyse mit Säuren oder Basen können die einpolymerisierten N-Vinylformamideinheiten in Vinylamineinheiten umgewandelt werden. Vinylamin-Einheiten enthaltende Polymerisate werden außerdem in der EP-A-0 262 577, der EP-A-264 649 und der EP-A-0 251 182 beschrieben.

Aus der WO-A-94/11408 sind unlösliche, nur wenig quellbare Polymere bekannt, die Vinylamineinheiten einpolymerisiert enthalten. Diese Polymerisate werden durch Polymerisieren von N-Vinylcarbonsäureamiden und gegebenenfalls anderen, damit copolymerisierbaren monoethylenisch ungesättigten Monomeren mit mindestens zwei ethylenisch ungesättigten Doppelbindungen enthaltenden Verbindungen als Vernetzer unter Ausschluß von Sauerstoff und Polymerisationsinitiatoren zu Popcornpolymerisaten und anschließende Hydrolyse der einpolymerisierten N-Vinylcarbonsäureamideinheiten zu Vinylamineinheiten durch Einwirkung von Säuren, Basen oder Enzymen hergestellt. Die Aminogruppen aufweisenden Popcornpolymerisate werden als Ionenaustauscher oder als Adsorberharz für Metallionen verwendet.

Die oben beschriebenen Polymeren mit N-Vinylglycin- oder N-Vinyliminodiessigsäureeinheiten sind wasserlöslich. Wenn man sie als Komplexbildner für in Wasser gelöste Metallionen einsetzt, so bedarf es einer aufwendigen Technologie, um die polymeren Komplexe aus der Lösung abzutrennen.

Der vorliegenden Erfindung liegt die Aufgabe zugrunde, neue Stoffe zur Verfügung zu stellen.

Die Aufgabe wird erfindungsgemäß gelöst mit unlöslichen, nur wenig quellbaren Polymerisaten mit modifizierten Aminogruppen, die Einheiten der Formeln 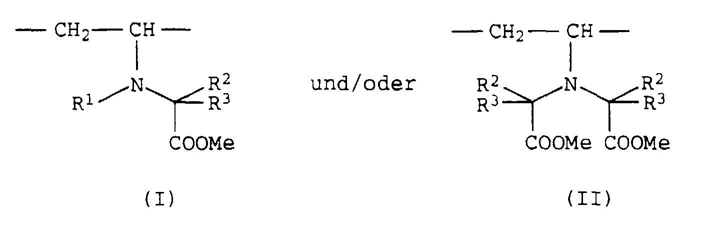 enthalten, in denen
- R¹ =: H, C₁- bis C₆-Alkyl
- R²,R³ =: H, C₁- bis C₂₀-Alkyl, Aryl, Aralkyl
- Me =: H, Alkalimetall-, Erdalkalimetall- oder Ammonium äquivalent
bedeuten.

Gegenstand der Erfindung ist außerdem ein Verfahren zur Herstellung von unlöslichen, nur wenig quellbaren Polymerisaten mit modifizierten Aminogruppen. Das Verfahren ist dadurch gekennzeichnet, daß man unlösliche, nur wenig quellbare Polymerisate, die Einheiten der Formel 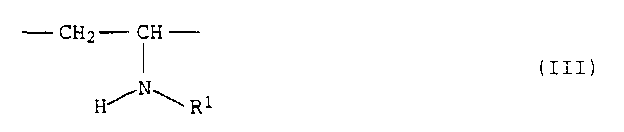 enthalten, in der R¹ = H oder C₁- bis C₆-Alkyl bedeutet, mit
(1) α-Halogencarbonsäuren oder deren Alkalimetall-, Erdalkalimetall oder Ammoniumsalzen
   oder
(2)
   - Aldehyden und Cyanwasserstoff oder Alkalicyanid oder
   - Cyanhydrinen aus Aldehyden und Alkalicyanid und Hydrolysieren der Additionsprodukte
umsetzt.

Ein weiterer Gegenstand der Erfindung ist die Verwendung der unlöslichen, nur wenig quellbaren Polymerisate mit modifizierten Aminogruppen als Adsorberharz für Metallionen sowie als Ionenaustauscher.

Die erfindungsgemäßen Polymerisate werden nach einem mehrstufigen Verfahren erhalten. Zunächst stellt man nach bekannten Methoden Popcorn-Polymerisate her, die in allen Lösemittel unlöslich und darin nur wenig quellbar sind. Zu diesem Zweck polymerisiert man Monomere, die den nachstehend angegebenen Gruppen (a), (b) und (c) zugeordnet werden.

Als Monomere der Gruppe (a) zur Herstellung der bekannten Popcorn-Polymerisate verwendet man N-Vinylcarbonsäureamide der Formel 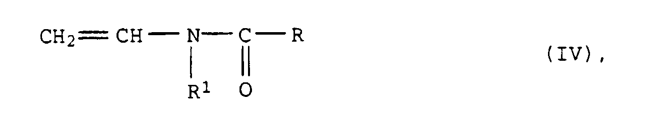 in der R und R¹ = H oder C₁- bis C₆-Alkyl bedeuten.

Geeignete Verbindungen der Formel IV sind beispielsweise N-Vinylformamid, N-Vinyl-N-methylformamid, N-Vinylacetamid, N-Vinyl-N-methylacetamid, N-Vinyl-N-ethylformamid, N-Vinyl-N-n-propylformamid, N-Vinyl-N-isopropylformamid, N-Vinyl-N-isobutylformamid, N-Vinyl-N-methylpropionamid, N-Vinyl-N-butylacetamid und N-Vinyl-N-methylpropionamid. Vorzugsweise verwendet man aus dieser Gruppe von Monomeren N-Vinylformamid.

Als Monomere der Gruppe (b), die gegebenenfalls bei der Herstellung der Popcorn-Polymerisate mitverwendet wird, handelt es sich um andere, mit den Monomeren der Gruppen (a) und (c) copolymerisierbare monoethylenisch ungesättigte Monomere. Hierzu gehören beispielsweise Acrylamid, Methacrylamid, Acrylsäure, Methacrylsäure, Acrylsäureester, Methacrylsäureester und/oder Vinylester. Die Acrylsäure- und Methacrylsäureester leiten sich vorzugsweise von gesättigten, einwertigen Alkoholen mit 1 bis 4 Kohlenstoffatomen bzw. gesättigten zweiwertigen 2 bis 4 Kohlenstoffatome enthaltenden Alkoholen ab. Beispiele für diese Ester sind Acrylsäuremethylester, Methacrylsäuremethylester, Acrylsäureethylester, Methacrylsäureethylester, Acrylsäure-n-propylester, Methylacrylsäure-n-propylester, Acrylsäureisopropylester, Methylacrylsäureisopropylester und die Ester der Acrylsäure- und Methacrylsäure, die sich von den isomeren Butanolen ableiten, sowie Hydroxyethylacrylat, Hydroxyethylmethacrylat, Hydroxypropylacrylat, Hydroxypropylmethacrylat, Hydroxybutylacrylat, Hydroxyisobutylacrylat und Hydroxyisobutylmethacrylat. Von den Vinylestern kommen vorzugsweise Vinylformiat, Vinylacetat und Vinylpropionat in Betracht. Weitere geeignete Monomere der Gruppe (b) sind Acrylnitril, Methacrylnitril, N-Vinylpyrrolidon, N-Vinylcaprolactam, 1-Vinylimidazol, 2-Methyl-l-vinylimidazol und 4-Methyl-1-vinylimidazol. Die Monomeren der Gruppe (b) können allein oder auch in Mischung untereinander zusammen mit den Monomeren der Gruppen (a) und (c) polymerisiert werden. Von den Monomeren der Gruppe (b) eignet sich vor allem N-Vinylpyrrolidon zur Herstellung von Popcorn-Polymerisaten.

Die Monomeren der Gruppe (b) sind, sofern sie bei der Herstellung der Popcorn-Polymerisate mitverwendet werden, zu 0,1 bis 80 Gew.-% in der Monomermischung aus (a) und (b) vorhanden.

Als Monomere der Gruppe (c) werden bei der Polymerisation Verbindungen eingesetzt, die als Vernetzer wirken und die mindestens zwei ethylenisch ungesättigte nichtkonjugierte Doppelbindungen im Molekül enthalten. Besonders geeignet sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethyliden-bis-3-(N-vinylpyrrolidon), N,N'-Divinyldiimidazolyl(2,2')butan und 1,1'-Bis-(3,3'-vinylbenzimidazolin-2-on)1,4-butan. Andere geeignete Vernetzer sind beispielsweise Alkylenglykoldi(meth)-acrylate wie Ethylenglykoldiacrylat, Ethylenglykoldimethacrylat, Tetraethylenglykoldiacrylat, Tetraethylenglykoldimethacrylat, Diethylenglykoldiacrylat, Diethylenglykoldimethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew.-%, bezogen auf die bei der Polymerisation eingesetzten Monomeren (a) und (b) angewendet.

Die Popcornpolymerisation wird nach bekannten Verfahren durchgeführt, z.B. als Fällungspolymerisation oder durch Polymerisieren in Substanz. Bevorzugt ist eine Arbeitsweise, bei der man, wie in der EP-B-0 177 812 beschrieben - die Popcornpolymerisation dadurch startet, daß man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisenden Verbindung als Vernetzer auf eine Temperatur in dem Bereich von 100 bis 150°C in Abwesenheit von Sauerstoff und Polymerisationsinitiatoren erhitzt. Diese Polymerisation wird insbesondere durch Anwesenheit geringer Mengen an Natronlauge oder Kalilauge initiiert. Innerhalb einer kurzen Zeit bildet sich ein polymerisationsfähiges Popcornpolymerisat, das bei Zugabe geeigneter anderer Monomermischungen, d.h. der Monomeren der Gruppe (a) und gegebenenfalls (b) und weitere Zugabe der Monomeren (c) die Popcornpolymerisation dieser Monomeren ohne Induktionsperiode startet.

Um die Popcornpolymerisation ohne Lösemittel durchzuführen, wird das Monomergemisch aus (a) und (c) sowie gegebenenfalls (b) durch Einleiten von Stickstoff inertisiert und anschließend auf eine Temperatur in dem Bereich von 100 bis 200, vorzugsweise 150 bis 180°C erhitzt. Es ist vorteilhaft, auch während der Polymerisation weiter einen schwachen Stickstoffstrom durch die Monomeren zu leiten. Ausschluß von Sauerstoff wird auch dadurch erreicht, daß man den Ansatz bei einem Druck polymerisiert, der unter dem Atmosphärendruck liegt und bei dem die Monomeren sieden. Die pulverförmigen Popcornpolymerisate haben eine durchschnittliche Teilchengröße von etwa 10 µm bis 5 mm, vorzugsweise 10 µm bis 500 µm.

Zur Herstellung der Popcorn-Polymerisate wird die Fällungspolymerisation in Wasser bei Monomerkonzentrationen von 5 bis 30 Gew.-%, Temperaturen von 20 bis 200°C und pH-Werten oberhalb von 6 bevorzugt. Weitere Angaben zur Herstellung der Popcornpolymerisate und der Hydrolyse der einpolymerisierten N-Vinylcarbonsäureamideinheiten können der WO-A-94/11408 entnommen werden. Die Popcornpolymerisate enthalten beispielsweise 20 bis 100 Gew.-% N-Vinylcarbonsäureamide der Formel IV einpolymerisiert.

Bei der Hydrolyse werden mindestens 0,5 % der einpolymerisierten N-Vinylcarbonsäureamide der Formel IV unter Bildung von Aminogruppen hydrolysiert. Die Hydrolyse wird soweit geführt, daß mindestens 0,1 %, vorzugsweise mindestens 20 % der in den Popcornpolymerisaten enthaltenen N-Vinylcarbonsäureamideinheiten hydrolysiert sind. Als Hydrolysemittel kommen beispielsweise Säuren, Basen oder Enzyme in Betracht.

Geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphosphorsäure) oder organische Säuren, z.B. C₁- bis C₅-Carbonsäuren wie Ameisensäure, Essigsäure oder Propionsäure oder aliphatische und aromatische Sulfonsäuren, wie Methansulfonsäure, Benzolsulfonsäure oder Toluolsulfonsäure. Bei der Hydrolyse mit Säuren beträgt der pH-Wert 0 bis 5. Pro abzuspaltenden Carbonsäurerest im Polymerisat benötigt man 0,05 bis 1,5 Äquivalente an Säure, vorzugsweise 0,4 bis 1,2.

Nach saurer Hydrolyse liegen die Aminfunktionen enthaltenden Popcornpolymerisate in der Regel als Salze vor, wobei als Gegenion die entsprechenden Säureanionen oder Anionen der freigesetzten Carbonsäuren, beispielsweise Formiat, in Frage kommen. Zur Herstellung der erfindungsgemäßen wasserunlöslichen Polymerisate ist es vorteilhaft, die Polymerisate in wäßriger Suspension durch Zugabe von Basen partiell oder vollständig zu deprotonieren. Geeignete Basen sind vor allem Alkalimetall- und Erdalkalimetallhydroxide, insbesondere Natriumhydroxid, Alkalimetall- und Erdalkalimetallcarbonate, insbesondere Natriumcarbonat, Ammoniak und Alkylderivate des Ammoniaks. Die bei der Neutralisation gebildeten Salze, z.B. Natriumsulfat, verbleiben in wäßriger Lösung.

Bei der Hydrolyse mit Basen können Metallhydroxide von Metallen der ersten und zweiten Hauptgruppe des Periodischen Systems verwendet werden, beispielsweise Lithiumhydroxid, Natriumhydroxid, Kaliumhydroxid, Calciumhydroxid, Strontiumhydroxid und Bariumhydroxid. Ebenso eignen sich aber auch Ammoniak oder Alkyl- und Arylderivate des Ammoniaks, z.B. Alkyl- oder Arylamine wie Triethylamin, Monoethanolamin, Diethanolamin, Triethanolamin, Morpholin, Piperidin, Pyrrolidin oder Anilin. Bei der Hydrolyse mit Basen beträgt der pH-Wert der Reaktionsmischung z.B. 8 bis 14. Die Basen können in festem, flüssigem oder gegebenenfalls auch gasförmigen Zustand, verdünnt oder unverdünnt eingesetzt werden. Vorzugsweise verwendet man Ammoniak, Natronlauge oder Kalilauge. Die Hydrolyse in sauren oder alkalischen pH-Bereich erfolgt bei Temperaturen von 20 bis 170°C, vorzugsweise 50 bis 120°C. Sie ist nach etwa 2 bis 8, vorzugsweise 3 bis 5 Stunden beendet. Besonders bewährt hat sich eine Verfahrensweise, bei der die Säuren oder Basen in wäßriger Lösung zugesetzt werden. Nach der Hydrolyse führt man in der Regel eine Neutralisation durch, so daß der pH-Wert der hydrolysierten Polymerlösung 2 bis 8, vorzugsweise 3 bis 7 beträgt. Die Neutralisation ist dann erforderlich, wenn ein Fortschreiten der Hydrolyse von teilweise hydrolysierten Polymerisaten vermieden oder verzögert werden soll. Die Hydrolyse mit Hilfe von Basen hat für die weitere Verarbeitung den Vorteil, daß sich ein zusätzlicher Neutralisationsschritt erübrigt.

Die Hydrolyse kann auch mit Hilfe von Enzymen, beispielsweise Proteasen, Ureasen oder Amidasen, vorgenommen werden.

Die Vinylamineinheiten enthaltenden, wasserunlöslichen, nur wenig quellbaren Popcornpolymerisate können aus der wäßrigen Suspension isoliert werden. Es ist aber auch möglich, die anschließende Umsetzung mit α-Halogencarbonsäuren bzw. Cyanwasserstoff bzw. Alkalicyaniden und Aldehyden unmittelbar an die Hydrolyse anzuschließen.

Die erfindungsgemäße Reaktion des unlöslichen, Vinylamin-einheiten enthaltenden Polymerisats mit a-Halogencarbonsäuren verläuft unerwartet glatt und quantitativ. Ein chemisch und physikalisch vernetztes Polymerisat sollte aufgrund seiner Unlöslichkeit in Lösemitteln auch nur sehr schwer, wenn überhaupt von Reagenzien angegriffen werden. Tatsächlich erhält man jedoch in Abhängigkeit von den Reaktionsbedingungen, d.h. der Menge an eingesetzter α-Halogencarbonsäure bzw. deren Salze sowie des Reaktionsmediums, der Reaktionszeit sowie der Reaktionstemperatur Popcornpolymerisate mit modifizierten Aminogruppen der Formeln I und II, 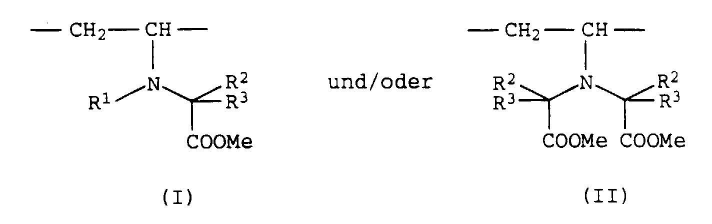 in denen R¹ = H, C₁- bis C₆-Alkyl, R², R³ = H, C₁- bis C₂₀-Alkyl, Aryl, Aralkyl und Me = H, ein Alkalimetall-, Erdalkalimetall- oder Ammoniumäquivalent bedeuten. Aus primären Vinylamineinheiten (R¹ = H) kann sowohl Struktur I, als auch II entstehen. Bei sekundären Vinylamineinheiten (R¹ ≠ H) ist nur Struktur I möglich. Vorzugsweise geht man von Popcornpolymerisaten mit primären Vinylamineinheiten (R¹ = H) aus.

Als α-Halogencarbonsäuren kommen alle Verbindungen der Formel 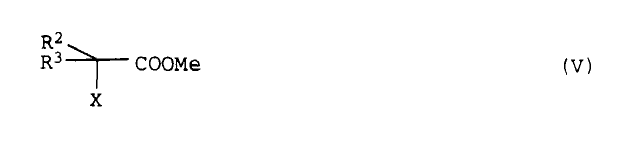 in Frage, wobei R², R³ = H, C₁- bis C₂₀-Alkyl, Aryl, Aralkyl und Me = H, ein Alkalimetall-, Erdalkalimetall- oder Ammoniumäquivalent bedeuten und der Substituent X für ein Halogen, wie F, Cl, Br oder J steht. Geeignete α-Halogencarbonsäuren der Formel V sind beispielsweise Chloressigsäure, Bromessigsäure, Jodessigsäure, α-Chlorpropionsäure, α-Brompropionsäure, α-Jodpropionsäure, α-Chlorbuttersäure, α-Brombuttersäure, α-Chlorisobuttersäure, α-Bromcapronsäure, 2-Chlorvaleriansäure, 2-Brom-phenylessigsäure, 2-Chlor-3-phenylpropionsäure, 2-Brom-3-phenylpropionsäure, α-Chlorlaurinsäure oder α-Brompalmitinsäure. Vorzugsweise verwendet man Chloressigsäure.

Die α-Halogencarbonsäuren können als solche oder auch in Form ihrer Salze eingesetzt werden. Als Gegenion eignen sich dabei ein- oder höherwertige Metallionen, z.B. Alkali- oder Erdalkalimetallionen. In Frage kommen auch Ammoniumionen oder deren Alkylderivate wie beispielsweise Methyl-, Dimethyl-, Trimethyl- oder Tetramethylammoniumionen oder andere Alkylammoniumionen. Vorzugsweise geht man von Natriumsalzen aus.

Pro Amineinheit im Popcornpolymeren benötigt man üblicherweise 0,05 bis 5,0, vorzugsweise 0,1 bis 2,2, Äquivalente an α-Halogencarbonsäure bzw. deren Alkalimetall- oder Erdalkalimetallsalz.

Die Umsetzung erfolgt in Suspension, bevorzugt in einem Medium, in dem die α-Halogencarbonsäure bzw. ihr Salz löslich ist. Am besten geeignet sind dabei inerte Lösemittel wie z.B. Wasser, Methanol, Ethanol, Isopropanol, Ethylenglykol, Diethylenglykol, Acetonitril, Aceton, Tetrahydrofuran, Dioxan, N-Methylpyrrolidon, Diethylether, Cyclohexan, Pentan, Benzol oder Toluol sowie Mischungen der genannten Lösungsmittel. Vorzugsweise führt man die Umsetzung in Wasser, Methanol, Ethanol oder einer Mischung dieser Lösungsmittel durch. Der Polymergehalt in der Suspension beträgt beispielsweise 0,1 bis 5D Gew.-%, vorzugsweise 1 bis 20 Gew.-%, so daß eine gute Durchmischung während der Reaktion gewährleistet ist, um eine Agglomeration zu vermeiden. Besonders bewährt hat sich eine Verfahrensweise, bei der die α-Halogencarbonsäure oder ihre Salze in Lösung zugesetzt werden. Bei Umsatz in wäßrigem Medium wird ein pH-Wert von 7 bis 12, vorzugsweise 8 bis 10 eingestellt.

Die Reaktion erfolgt bei Temperaturen von 20 bis 180°C, bevorzugt 50 bis 150°C und ganz besonders bevorzugt 60 bis 110°C. Bei Temperaturen oberhalb der Siedetemperatur des Reaktionsmediums wird die Reaktion unter Druck in einem entsprechenden Druckbehälter durchgeführt. Die Reaktionszeit beträgt z.B. 1 bis 30, vorzugsweise 6 bis 20 Stunden. Der Umsatz kann beispielsweise durch quantitative Analyse des während der Reaktion freigesetzten Halogenids bestimmt werden.

Eine weitere Möglichkeit, um die Aminogruppen in den Popcornpolymerisaten so zu modifizieren, daß man unlösliche, nur wenig quellbare Polymerisate mit Einheiten der Formeln I und/oder II erhält, besteht in der Umsetzung von Vinylamineinheiten einpolymerisiert enthaltenden Popcornpolymerisaten mit
- Aldehyden und Cyanwasserstoff oder Alkalicyaniden oder
- Cyanhydrinen aus Aldehyden und Alkalicyanid und jeweils anschließendes Hydrolysieren der Additionsprodukte.

Geeignete Aldehyde sind beispielsweise Formaldehyd, Acetaldehyd, Propionaldehyd, n-Butyraldehyd, Pentanal, Hexanal, Heptanal, Octanal, Decanal, Benzaldehyd und Oxoaldehyde wie C₁₃/C₁₅-oxoaldehyde oder C₉/C₁₁-Oxoaldehyde. Man kann auch Mischungen mehrerer Aldehyde einsetzen. Vorzugsweise verwendet man Formaldehyd, der üblicherweise in Form einer konzentrierten wäßrigen Lösung eingesetzt wird. Leichtflüchtige Aldehyde wie Formaldehyd und Acetaldehyd können jedoch auch gasförmig in das Reaktionsgemisch eingeleitet werden.

Als Alkalicyanide kommen beispielsweise Natriumcyanid und Kaliumcyanid in Betracht, wobei bevorzugt Natriumcyanid eingesetzt wird. Auch Ammoniumcyanid kann verwendet werden.

Die Reaktion erfolgt in einem Medium, in dem sich Aldehyd und Cyanid in ausreichendem Maße lösen, wie Wasser, Methanol, Ethanol, Isopropanol, n-Propanol, n-Butanol, Ethylenglykol, Diethylenglykol, Acetonitril, Aceton, Tetrahydrofuran, Dioxan oder N-Methylpyrrolidon oder auch Mischungen der genannten Lösemittel. Vorzugsweise führt man die Umsetzung in Wasser durch. Die Reaktion mit Cyanwasserstoff wird z.B. bei pH-Werten von 0 bis 10, vorzugsweise 2 bis 6 durchgeführt. Verwendet man dagegen Alkalicyanide so empfiehlt sich beispielsweise ein pH-Bereich von 8 bis 14, vorzugsweise 10 bis 12. Der Polymergehalt in der Suspension beträgt z.B. 0,1 bis 50 Gew.-%, vorzugsweise 1 bis 20 Gew.-%, so daß eine gute Durchmischung während der Reaktion gewährleistet ist, damit keine Agglomeration eintritt.

Aldehyd und Cyanwasserstoff bzw. Alkalicyanid werden bevorzugt in äquimolaren Mengen eingesetzt, so daß 0,1 bis 100 % der im Polymeren vorhandenen Aminfunktionen carboxymethyliert werden. Pro NH₂-Gruppe benötigt man üblicherweise 0,15 bis 3,0 Äquivalente an Aldehyd sowie Alkalicyanid, vorzugsweise 0,2 bis 2 Äquivalente. Überschüssige Mengen an Aldehyden oder Alkalicyaniden stören nicht, weil sie leicht vom Reaktionsprodukt abgetrennt werden könnnen. Aus Popcornpolymerisaten mit primären Vinylamineinheiten (R¹ = H) erhält man Popcornpolymere mit Einheiten der Formel I oder II sowie Popcornpolymere, die Einheiten der Formel I und II enthalten, während bei sekundären Vinylamineinheiten aufweisenden Popcornpolymeren nur die Einheiten der Formel I entstehen. Vorzugsweise geht man von Popcornpolymerisaten aus, die durch Polymerisation von N-Vinylformamid erhältlich sind und die primäre Aminogruppen aufweisen.

Die Umsetzung kann sowohl kontinuierlich als auch diskontinuierlich vorgenommen werden. In der Regel werden Aldehyd und Cyanwasserstoff bzw. Alkalicyanid in wäßrigen Lösungen bei Temperaturen von -15 bis 100°C, vorzugsweise 0 bis 70°C der Polymersuspension zugesetzt und diese dann zur Vervollständigung der Umsetzung noch einige Zeit bei 20 bis 180°C, bevorzugt 50 bis 150°C und ganz besonders bevorzugt 60 bis 110°C gerührt. Die Reagenzien können sowohl auf einmal als auch getrennt von einander über einen Zeitraum von beispielsweise 0,5 bis 10 Stunden zudosiert werden. Besonders vorteilhaft ist eine Vorgehensweise, bei der Aldehyd und Cyanwasserstoff bzw. Alkalicyanid in Lösung gleichzeitig zudosiert werden, wobei man während der Zugabe die Konzentration an Cyanid im Reaktionsgemisch 1 bis 50 % oberhalb der Konzentration an Aldehyd einstellt. Das bedeutet in der Praxis, daß Cyanwasserstoff bzw. Alkalicyanid mit etwas höherer Geschwindigkeit zum Polymeren dosiert wird als der Aldehyd oder alternativ Cyanid mit gleicher Geschwindigkeit aber zeitlich vor dem Aldehyd zudosiert wird. Dadurch wird die Bildung von Nebenprodukten zurückgedrängt.

Man kann bei Normaldruck, erhöhtem Druck oder auch vermindertem Druck arbeiten. Die Reaktion mit Alkalicyaniden im alkalischen pH-Bereich führt man vorzugsweise unter vermindertem Druck durch, um den bei der Hydrolyse entstehenden Ammoniak aus dem Reaktionsgemisch zu entfernen. Eine andere bevorzugte Ausführungsform des Verfahrens besteht darin, während der Umsetzung einen Inertgasstrom, z.B. Luft oder Stickstoff, durch das Reaktionsgemisch zu leiten. Besonders bevorzugt ist eine Arbeitsweise, bei der unter gleichzeitiger Strippung mit einem inerten Gas und unter vermindertem Druck, beispielsweise 100 bis 900, vorzugsweise 500 bis 800 mbar, gearbeitet wird. Verwendet man Cyanwasserstoff, so erhält man zunächst ein cyanoalkyliertes Produkt, das dann in einem zweiten Schritt mit Hilfe von Basen, vorzugsweise Natronlauge, hydrolysiert wird. Das Zwischenprodukt kann sowohl isoliert, als auch im selben Reaktionsmedium weiterverarbeitet werden. Bevorzugt wird die Verseifung unter vermindertem Druck bei Strippung mit Inertgas durchgeführt. Durch Wiederholung der Carboxyalkylierungsreaktion läßt sich der Grad der Carboxyalkylierung der Aminogruppen enthaltenden Popcornpolymerisate steigern.

Nach Beendigung der Reaktion können die erfindungsgemäßen Popcornpolymerisate beispielsweise durch Filtration oder Zentrifugation bei anschließendem Auswaschen der enthaltenden Salze mit dem entsprechenden Suspensionsmittel, vorzugsweise mit Wasser oder Alkohol sowie Trocknen in üblichen Trocknern wie Umluft- oder Vakuumtrockenschrank, Schaufeltrockner oder Stromtrockner isoliert werden. Die Polymerisate sind in Wasser und allen bekannten Lösungsmitteln unlöslich und quellen darin auch nur geringfügig.

Die unlöslichen, Carboxylgruppen tragenden Popcornpolymere eignen sich dazu, Metallionen aus Lösungen zu entfernen. Die Art des Lösemittels ist dabei unerheblich. Vorzugsweise wird das Verfahren jedoch auf wäßrige Lösungen von Metallionen, beispielsweise Mg²⁺, Ca²⁺, Sr²⁺, Ba²⁺, Al³⁺, Ga³⁺, Rb⁺, Cs⁺, Cu²⁺, Ag⁺, Au³⁺, Fe²⁺, Fe³⁺, Ni²⁺, Pd²⁺, Pt²⁺, Co²⁺, Rh²⁺, Ir²⁺, Cr³⁺, Mn²⁺, Mn³⁺, Zn²⁺, Cd²⁺, Hg²⁺, Sn²⁺ und Pb²⁺ angewendet. Die Anionen der Metallsalze haben kaum Einfluß auf die Entfernbarkeit der Metallionen aus den Lösungen. Die Menge an Popcornpolymerisat mit Einheiten der Formeln I und/oder II wird so gewählt, daß die molmäßige Anzahl an zur Verfügung stehenden Carboxylgruppen der Anzahl an Metallionen in der Lösung zumindest äquivalent ist. Vorzugsweise arbeitet man mit einem molaren Überschuß an Carboxylgruppen. Zur weitgehenden Komplexierung der Metallionen sollten dabei 2 bis 100 mol-%, vorzugsweise mehr als 50 mol-% der Carboxylfunktionen der Popcornpolymerisate deprotoniert vorliegen. Zweckmäßigerweise geht man so vor, daß man einer Metallsalzlösung das erfindungsgemäße Popcornpolymerisat mit entsprechender Menge an Carboxylfunktionen zusetzt. Es ist aber auch möglich, solche Popcornpolymere als freie Säuren in der Metallsalzlösung zu suspendieren und durch Zusatz von Basen, z.B. Natronlauge oder Ammoniak, den pH-Wert der Lösung zu erhöhen und die Carboxylfunktionen dadurch zu deprotonieren. Eine merkliche Komplexierung ist im Fall von Cu²⁺ bereits bei pH-Werten oberhalb von 5 zu beobachten.

Das Komplexierungsvermögen der Carboxylgruppen tragenden Polymeren wird durch quantitative Analyse der in Lösung verbliebenen Metallionen bestimmt. Als Analysenmethode eignet sich beispielsweise die komplexometrische Titration sowie die Atomabsorptionsspektroskopie oder auch die Spektralphotometrie.

### Beispiele

### Beispiel 1

### Popcornpolymerisat 1

In einer Rührapparatur mit Rückflußkühler und Thermometer werden 10 g Popcornpolymerisat mit der molmäßigen Zusammensetzung an Einheiten von 87,7 % Vinylamin x 1/2 H₂SO₄, 4,6 % N-Vinylformamid, 6,6 % N-Vinylpyrrolidon und 1,1 % N,N'-Divinylethylenharnstoff (≡ 118 mmol protonierte Vinylaminfunktionen) in 300 g Wasser suspendiert. Man setzt 42,5 g Natriumchloracetat 97 %ig (≡ 354 mmol) zu und stellt mit 49 g 25 %iger wäßriger Natronlauge einen pH-Wert von 10 ein. Daraufhin erhitzt man die Suspension unter intensivem Rühren 10 h lang auf 80°C. Nach Abkühlung auf Raumtemperatur wird der Feststoff abgesaugt, mit Wasser mehrmals nachgewaschen und im Vakuumtrockenschrank 24 h lang bei 100°C und 100 mbar getrocknet. Man erhält 17,8 g carboxymethyliertes Popcornpolymerisat mit 73,7 mol-% Einheiten der Struktur I (R¹, R², R³ = H, Me = Na) und 14,0 mol% der Struktur II (R², R³ = H, Me = Na).

### Beispiel 2

### Popcornpolymerisat 2

Wie in Beispiel 1 beschrieben, werden 10 g eines Popcornpolymeren mit molmäßiger Zusammensetzung an Einheiten von 73,4 % Vinylamin x 1/2 H₂SO₄, 8,1 % N-Vinylformamid, 17,4 % N-Vinylpyrrolidon und 1,1 % N,N'-Divinylethylenharnstoff (≡ 93 mmol protonierte Vinylaminfunktionen) mit 39 g Natriumchloracetat, 97 %ig (≡ 325 mmol) und 45 g 25 %iger wäßriger Natronlauge umgesetzt. Man erhält 16,5 g carboxymethyliertes Popcornpolymerisat mit 78,0 mol-% Einheiten der Formel I (R¹, R², R³ = H, Me = Na) und 22,0 mol-% Einheiten der Formel II mit R², R³ = H und Me = Na.

### Beispiel 3

### Popcornpolymerisat 3

Wie in Beispiel 1 beschrieben, werden 10 g eines Popcornpolymeren mit molmäßiger Zusammensetzung an Einheiten von 56,0 % Vinylamin x 1/2 H₂SO₄, 4,2 % Vinylformamid, 38,5 % N-Vinylpyrrolidon und 1,3 % N,N'-Divinylethylenharnstoff (≡ 64,1 mmol protonierte Vinylaminfunktionen) mit 30,8 g Natriumchloracetat, 97 %ig (= 256,4 mmol) und 24 g 25 %iger wäßriger Natronlauge umgesetzt. Man erhält 14,4 g carboxymethyliertes Popcornpolymerisat mit 44,8 mol-% Einheiten der Formel I mit R¹, R², R³ = H und Me = Na und 11,2 mol-% Einheiten der Formel II mit R², R³ = H und Me = Na.

### Beispiel 4

### Popcornpolymerisat 4

Wie in Beispiel 1 beschrieben, werden 10 g eines Popcornpolymeren mit molmäßiger Zusammensetzung an Einheiten von 29,7 % Vinylamin x 1/2 H₂SO₄, 4,1 % N-Vinylformamid, 64,8 % N-Vinylpyrrolidon und 1,4 % N,N'-Divinylethylenharnstoff (≡ 30,3 mmol protonierte Vinylaminfunktionen) mit 14,7 g Natriumchloracetat, 97 %ig (≡ 122 mmol) und 10 g 25 %iger wäßriger Natronlauge umgesetzt. Man erhält 11,6 g carboxymethyliertes Popcornpolymerisat mit 21,6 mol-% Einheiten der Formel I, worin R¹, R², R³ = H und Me = Na ist und 8,1 mol-% Einheiten der Formel II, in der R², R³ = H und Me = Na bedeuten.

### Beispiel 5

### Popcornpolymerisat 5

In einer Rührapparatur, die mit Rückflußkühler, zwei Tropftrichtern und Thermometer ausgerichtet ist, werden 25 g Popcornpolymerisat mit der molmäßigen Zusammensetzung an Einheiten von 87,7 % Vinylamin, 4,6 % N-Vinylformamid, 6,6 % N-Vinylpyrrolidon und 1,1 % N,N'-Divinylethylenharnstoff (≅ 439 mmol Vinylaminfunktionen) in 770 ml Wasser suspendiert. Dazu tropft bei 20°C zunächst 26 g (95 mmol) 99 %ige Blausäure, danach innerhalb von 1 h 95 g (950 mmol) einer 30 %igen Formaldehydlösung. Die Reaktionsmischung wird 48 h bei 40°C gerührt. Nach Absaugen, Waschen mit Wasser und Trocknung werden 55 g eines cyanomethylierten Produktes erhalten. Dieses wird in 160 g einer 10 %igen wäßrigen NaOH aufgenommen und unter Durchleiten von Stickstoff bei einem Druck von 800 bis 900 mbar 36 h lang bei 95°C gerührt, bis kein Ammoniak mehr aus der Reaktionsmischung entweicht. Nach Abkühlen auf Raumtemperatur wird der Feststoff abfiltriert, mit Wasser mehrmals gewaschen und im Vakuumtrockenschrank 24 h lang bei 100°C und 100 mbar getrocknet. Man erhält 80 g carboxymethyliertes Popcornpolymerisat mit 24 mol-% Einheiten der Formel I, worin R¹, R², R³ = H und Me = Na und 66 mol-% Einheiten der Formel II, in der R², R³ = H und Me = Na bedeuten.

### Anwendungstechnische Beispiele

Zur Untersuchung des Komplexierungsvermögens werden jeweils 100 g einer unten angegebenen Stammlösung, die jeweils 60 mg des in der Tabelle angegebenen Metallions enthält mit unterschiedlichen Mengen der zuvor beschriebenen fein zerriebenen Popcornpolymerisate 1 bis 4 versetzt. Man rührt die Suspension 1 h bei Raumtemperatur und bestimmt dann den Metallionengehalt der Lösung durch komplexometrische Titration mit Titriplex III-Lösung. Die Ergebnisse sind in Tabelle 1 dargestellt.

| | | | |
|---|---|---|---|
| Stammlösungen: | CuSO₄ | 1,5537 | g pro 1 wäßrige Lösung |
| | NiSO₄ x 6H₂O | 2,7952 | g pro 1 wäßrige Lösung |
| | ZnSO₄ x 7H₂O | 2,6694 | g pro 1 wäßrige Lösung |
| | Hg(NO₃)₂ x H₂O | 5,0179 | g pro 1 wäßrige Lösung |
| | CaCl₂ x 2H₂O | 2,2114 | g pro 1 wäßrige Lösung |
| | MgCl₂ x 6H₂O | 5,0179 | g pro 1 wäßrige Lösung |

**Tabelle 1:**

| Komplexierungsvermögen der Popcornpolymerisate 1 bis 4 | | | | | |
|---|---|---|---|---|---|
| Metallion | Polymer | Abreicherung [%] | | | |
| | [g] | Popcornpolymer 1 | Popcornpolymer 2 | Popcornpolymer 3 | Popcornpolymer 4 |
| Cu²⁺ | 0,1 | 38 | 33 | 26 | 18 |
| | 0,6 | 100 | 100 | 100 | 57 |
| | 2,0 | 100 | 100 | 100 | 100 |
| Ni²⁺ | 0,1 | 28 | 30 | 17 | 9 |
| | 0,6 | 100 | 100 | 84 | 38 |
| | 2.0 | 100 | 100 | 100 | 96 |
| Zn²⁺ | 0,1 | 30 | 33 | 20 | 9 |
| | 0,6 | 97 | 97 | 96 | 43 |
| | 2,0 | 98 | 98 | 96 | 97 |
| Hg²⁺ | 0,1 | 85 | 91 | 60 | 34 |
| | 0,6 | 93 | 93 | 92 | 92 |
| | 2,0 | 94 | 94 | 94 | 93 |
| Ca²⁺ | 0,1 | 19 | 18 | 14 | 6 |
| | 0,6 | 97 | 93 | 61 | 23 |
| | 2,0 | 99 | 98 | 98 | 67 |
| Mg²⁺ | 0,1 | 14 | 13 | 9 | 6 |
| | 0,6 | 65 | 60 | 38 | 15 |
| | 2,0 | 98 | 98 | 98 | 43 |

## Patentansprüche

1. Unlösliche, nur wenig quellbare Polymerisate mit modifizierten Aminogruppen, dadurch gekennzeichnet, daß sie Einheiten der Formeln 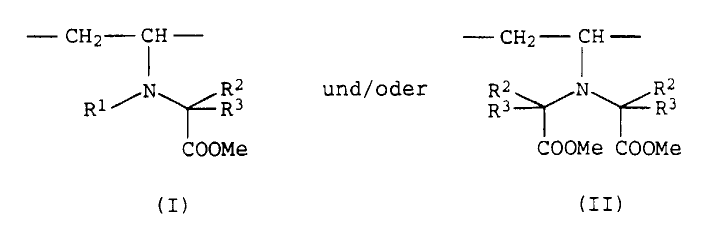 enthalten, in denen
R¹ = H, C₁- bis C₆-Alkyl
R²,R³ = H, C₁- bis C₂₀-Alkyl, Aryl, Aralkyl
Me = H, Alkalimetall-, Erdalkalimetall- oder Ammoniumäquivalent
bedeuten.

2. Unlösliche, nur wenig quellbare Polymerisate mit modifizierten Aminogruppen nach Anspruch 1, dadurch gekennzeichnet, daß die Substituenten R¹, R² und R³ für H stehen.

3. Verfahren zur Herstellung von unlöslichen, nur wenig quellbaren Polymerisaten mit modifizierten Aminogruppen nach Anspruch 1 oder 2, dadurch gekennzeichnet, daß man unlösliche, nur wenig quellbare Polymerisate, die Einheiten der Formel 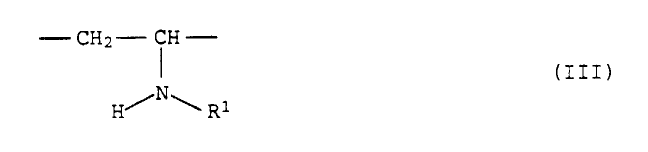 enthalten, in der R¹ = H oder C₁- bis C₆-Alkyl bedeutet, mit
(1) α-Halogencarbonsäuren oder deren Alkalimetall-, Erdalkalimetall oder Ammoniumsalzen
oder
(2)
- Aldehyden und Cyanwasserstoff oder Alkalicyanid
oder
- Cyanhydrinen aus Aldehyden und Alkalicyanid und Hydrolysieren der Additionsprodukte
umsetzt.

4. verfahren nach Anspruch 3, dadurch gekennzeichnet, daß man 0,1 bis 100 % der im Polymerisat enthaltenen Einheiten der Formel III umsetzt.

5. Verfahren nach Anspruch 3 oder 4, dadurch gekennzeichnet, daß man die Umsetzungen in wäßriger Suspension durchführt.

6. Verfahren nach Anspruch 3 oder 4, dadurch gekennzeichnet, daß man die Modifizierung der Einheiten der Formel 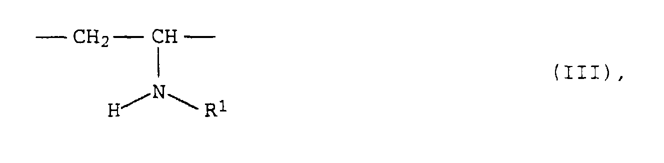 in der R¹ = H oder C₁- bis C₆-Alkyl bedeutet,
mit Formaldehyd und Natriumcyanid in wäßrigem Medium vornimmt.

7. Verwendung der unlöslichen, nur wenig quellbaren Polymerisate mit modifizierten Aminogruppen nach Anspruch 1 oder 2, als Adsorberharz für Metallionen sowie als Ionenaustauscher.

## Claims

1. An insoluble, only slightly swellable polymer having modified amino groups, which contains units of the formulae 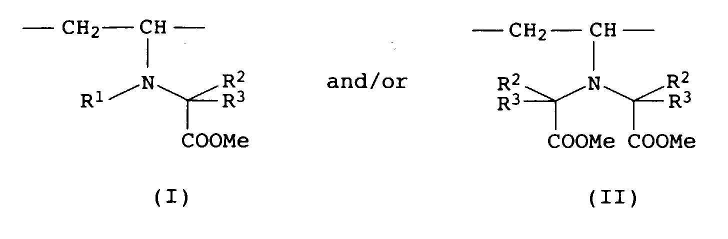 where
R¹ is H or C₁-C₆-alkyl
R²,R³ are each H, C₁-C₂₀-alkyl, aryl or aralkyl
Me is H or one equivalent of an alkali metal, of an alkaline earth metal or of ammonium.

2. An insoluble, only slightly swellable polymer having modified amino groups as claimed in claim 1, wherein R¹, R² and R³ are each H.

3. A process for the preparation of an insoluble, only slightly swellable polymer having modified amino groups as claimed in claim 1 or 2, wherein an insoluble, only slightly swellable polymer which contains units of the formula 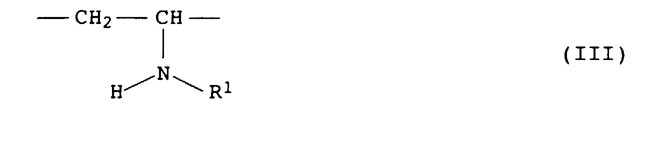 where R¹ is H or C₁-C₆-alkyl, is reacted with
(1) an α-halocarboxylic acid or an alkali metal, alkaline earth metal or ammonium salt thereof
or
(2)
- an aldehyde and hydrogen cyanide or an alkali metal cyanide or
- a cyanohydrin obtained from an aldehyde and alkali metal cyanide, and hydroylsis of the adduct is carried out.

4. A process as claimed in claim 3, wherein from 0.1 to 100% of the units of the formula III which are present in the polymer are converted.

5. A process as claimed in claim 3 or 4, wherein the reactions are carried out in aqueous suspension.

6. A process as claimed in claim 3 or 4, wherein the modification of the units of the formula 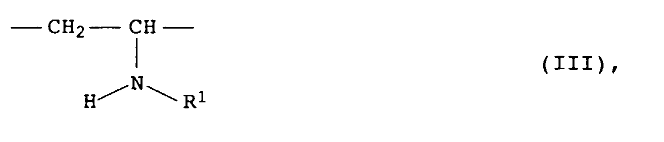 where R¹ is H or C₁-C₆-alkyl,
with formaldehyde and sodium cyanide is carried out in an aqueous medium.

7. The use of an insoluble, only slightly swellable polymer having modified amino groups, as claimed in claim 1 or 2, as an adsorber resins for metal ions and as an ion exchanger.

## Revendications

1. Polymérisats insolubles, seulement peu gonflables, avec des groupes amino modifiés, caractérisés en ce qu'ils contiennent des motifs de formules 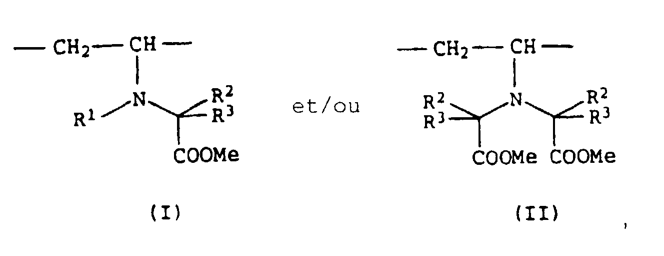 dans lesquelles
R¹ représente un atome de H, un groupe alkyle en C₁ à C₆,
R², R³ représentent un atome de H, un groupe alkyle en C₁ à C₂₀, aryle, aralkyle,
Me représente un atome de H, un équivalent de métal alcalin, de métal alcalino-terreux ou d'ammonium.

2. Polymérisats insolubles, seulement peu gonflables, avec des groupes amino modifiés selon la revendication 1, caractérisés en ce que les substituants R¹, R² et R³ sont mis pour un atome de H.

3. Procédé pour la préparation de polymérisats insolubles, seulement peu gonflables, avec des groupes amino modifiés, selon la revendication 1 ou 2, caractérisé en ce que l'on met à réagir des polymérisats insolubles seulement peu gonflables qui contiennent des motifs de formule 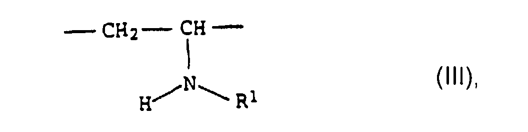 dans laquelle R¹ représente un atome de H ou un groupe alkyle en C₁ à C₆, avec
(1) des acides α-halogénocarboxyliques ou leurs sels de métal alcalin, de métal alcalino-terreux ou d'ammonium.
ou
(2)
- des aldéhydes et le cyanure d'hydrogène ou un cyanure de métal alcalin ou
- des cyanhydrines provenant d'aldéhydes et d'un cyanure de métal alcalin et avec hydrolyse des produits d'addition.

4. Procédé selon la revendication 3, caractérisé en ce que l'on met à réagir 0,1 à 100% des motifs de formule III contenus dans le polymérisat.

5. Procédé selon la revendication 3 ou 4, caractérisé en ce que l'on réalise les réactions dans une suspension aqueuse.

6. Procédé selon la revendication 3 ou 4, caractérisé en ce que l'on procède à la modification des motifs de formule 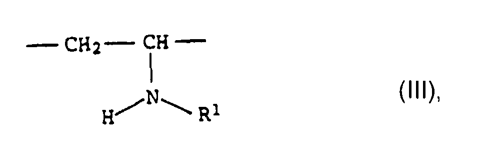 dans laquelle R¹ représente un atome de H ou un groupe alkyle en C₁ à C₆,
avec le formaldéhyde et le cyanure de sodium dans un milieu aqueux.

7. Utilisation de polymérisats insolubles, seulement peu gonflables, avec des groupes amino modifiés selon la revendication 1 ou 2, en tant que résine adsorbante pour des ions métalliques ainsi qu'en tant qu'échangeur d'ions.
